# EUROPÄISCHE PATENTSCHRIFT

(11) **EP 3 598 254 B1**
(45) Veröffentlichungstag und Bekanntmachung des Hinweises auf die Patenterteilung: **31.03.2021**
(21) Anmeldenummer: 18183956.4
(22) Anmeldetag: 17.07.2018
(51) Int. Cl.: H04L 12/24, H04L 12/46, G05B 19/05, G05B 19/042, G05B 19/418

(54) **VERFAHREN ZUR KONFIGURATIONSÄNDERUNG UND INDUSTRIELLES ANLAGENSYSTEM**
METHOD FOR CHANGING CONFIGURATION AND INDUSTRIAL PLANT SYSTEM
PROCÉDÉ DE CHANGEMENT DE CONFIGURATION ET SYSTÈME D'INSTALLATIONS INDUSTRIEL

(43) Veröffentlichungstag der Anmeldung: 22.01.2020
(73) Patentinhaber: Siemens Aktiengesellschaft, 80333 München (DE)
(72) Erfinder: Barthel, Herbert, 91074 Herzogenaurach (DE); Ferenczi, David, 8045 Graz (AT); Schmauss, Wolfgang, 90607 Rückersdorf (DE); Walter, Maximilian, 90408 Nürnberg (DE)

(56) Entgegenhaltungen:
- DE-A1- 19 818 181
- US-A1- 2014 082 312

## Beschreibung

Die Erfindung betrifft ein Verfahren zur Konfigurationsänderung von Kommunikationsparametern einer auf funktionale Sicherheit ausgelegten Kommunikationsverbindung zwischen einem ersten Automatisierungsgerät und einem zweiten Automatisierungsgerät, wobei zum Austausch von Daten von dem ersten Automatisierungsgerät zu dem zweiten Automatisierungsgerät und umgekehrt ein Sicherheitsprotokoll verwendet wird, wobei die Daten als Prozess-Ausgangs-Daten bzw. als Prozess-Eingangs-Daten für einen sicherheitskritischen Prozess dienen, und wobei auf dem ersten Automatisierungsgerät eine erste Sende-Empfangs-Anwendung abläuft, welche zusammen mit einem ersten Gerätetreiber die Kommunikation durchführt, und auf dem zweiten Automatisierungsgerät eine zweite Sende-Empfangs-Anweisung abläuft, welche zusammen mit einen zweiten Gerätetreiber die Kommunikation durchführt, wobei die jeweiligen Sende-Empfangs-Anwendungen und die jeweiligen Gerätetreiber vor dem Ändern mit einem ersten Satz von Kommunikationsparametern und nach dem Ändern mit einem zweiten Satz von Kommunikationsparametern arbeiten.

Auch betrifft die Erfindung ein industrielles Anlagensystem zur Steuerung eines sicherheitskritischen Prozesses mit einem ersten Automatisierungsgerät und einem zweiten Automatisierungsgerät, welche über einen Feldbus miteinander verbunden sind, das erste Automatisierungsgerät weist eine erste Sende-Empfangs-Anwendung und einen ersten Gerätetreiber auf, das zweite Automatisierungsgerät weist eine zweite Sende-Empfangs-Anwendung und einen zweiten Gerätetreiber auf, weiterhin ist ein Konfigurationssystem vorhanden, welches ausgestaltet ist, die jeweiligen Sende-Empfangs-Anwendungen und die jeweiligen Gerätetreiber mit einem ersten Satz von Kommunikationsparametern zu konfigurieren und für eine Änderung die jeweiligen Sende-Empfangs-Anwendungen und die jeweiligen Gerätetreiber mit einem zweiten Satz von Kommunikationsparametern zu konfigurieren.

Die Erfindung betrifft das technische Gebiet der funktional sicheren Kommunikation, die u.a. die Kommunikation zwischen Feldgeräten, Steuerungskomponenten und ähnlichen Einrichtungen in der industriellen Prozessautomatisierung oder in der Fertigungsautomatisierung eingesetzt wird. Eine solche funktional sichere Kommunikation wird auch F-Kommunikation genannt und wird insbesondere bei sicherheitsrelevanten Anwendungen eingesetzt, insbesondere dann, wenn Fehler in der Kommunikation zur Gefährdung von Leib und Leben oder zur Gefährdung von Sachwerten führen können.

Bei einer solchen funktional sicheren Kommunikationsverbindung, insbesondere bei dem Betrieb einer industriellen Anlage, spielt ein unterbrechungsfreier Anlagenbetrieb auch bei einer Konfigurationsänderung an Geräten und Netzwerken oder beim Hinzufügen, Entfernen oder Tauschen von Geräten oder einzelnen Modulen eine entscheidende Rolle.

Konfigurationsänderungen während des Betriebes auch "change Parameter in Run" -Maßnahmen (PiR) genannt sollten demnach stoßfrei erfolgen und eine Kommunikation im Netzwerk nicht beeinträchtigen. Damit soll ein kontinuierlicher Produktionsbetrieb ohne einen Anlagenstillstand sichergestellt werden.

Das europäische Patent EP 2 814 193 B1 mit dem Titel "Verfahren und System zur Erkennung von Fehlern bei der Übertragung von Daten von einem Sender zu zumindest einen Empfänger" beschäftigt sich mit der funktional sicheren Kommunikation, eine Lösung für ein stoßfreies Umparametrieren in einer funktional sicheren Verbindung wird in der EP 2 814 193 B1 allerdings nicht aufgezeigt.

Es ist Aufgabe der vorliegenden Erfindung ein Umparametrieren bzw. eine Konfigurationsänderung von Kommunikationsparametern in einer auf funktionale Sicherheit ausgelegten Kommunikationsverbindung im laufenden Betrieb zu ermöglichen. D.h. soweit wie möglich ohne eine Unterbrechung oder einen Umschaltstoß für den Anlagen-Prozess.

Die Aufgabe wird bei dem eingangs genannten Verfahren dadurch gelöst, dass das erste Automatisierungsgerät an das zweite Automatisierungsgerät eine Anforderung zur Parameteränderung schickt. Und das zweite Automatisierungsgerät auf die Anforderung derart reagiert, dass eine Bereitschafts-Quittung auf die Anforderung gesendet wird, dabei wird unverzüglich mit der Aussendung der Bereitschafts-Quittung im zweiten Automatisierungsgerät ein Ausgangsprozess-Abbild eingefroren, wodurch die am zweiten Automatisierungsgerät zuletzt ausgegebene Prozess-Ausgangs-Daten auf ihren letzten Wert gehalten werden, und die Änderung der Kommunikationsparameter für das zweite Automatisierungsgerät wird durchgeführt und weiterhin das erste Automatisierungsgerät derart reagiert, dass nach Empfang der Bereitschaft-Quittung im ersten Automatisierungsgerät unverzüglich die Kommunikation angehalten wird und die Änderung der Kommunikationsparameter für das erste Automatisierungsgerät durchgeführt wird, wobei ein Eingangs-Prozess-Abbild eingefroren wird, wodurch die am ersten Automatisierungsgerät zuletzt anliegenden Prozess-Eingangs-Daten auf ihren letzten Wert gehalten werden, wenn die Änderung der Kommunikationsparameter im ersten Automatisierungsgerät abgeschlossen ist, dieses die Kommunikation neu startet und neue Prozess-Ausgangs-Daten als Ausgangs-Prozess-Abbild zum zweiten Automatisierungsgerät sendet, wodurch die am zweiten Automatisierungsgerät zuletzt ausgegeben Prozess-Ausgangs-Daten durch aktualisierte Prozess-Ausgangs-Daten ersetzt werden.

Für das Sicherheitsprotokoll im Sinne der Erfindung wird beispielsweise ein Profisafe Protokoll für eine Profinet Verbindung genutzt. Das funktional sichere Protokoll Profisafe wäre sodann in den Sende-Empfangs-Anwendungen und in den Gerätetreibern implementiert.

Mit Vorteil hat man nun eine schnellstmögliche Durchführung einer zweiseitigen Umparametrierung und ein Restart eines funktional sicheren Kommunikationsstacks erreicht. In dem im ersten Automatisierungsgerät die Umparametrierung sofort gestartet wird, sobald dieses eine Quittung auf Anforderung "Parameter-Änderung" erkannt hat, und ebenfalls das zweite Automatisierungsgerät mit der Umparametrierung sofort beginnt, wenn es die Quittung "Parameter-Änderung" generiert hat, obwohl das zweite Automatisierungsgerät noch nicht weis wann das erste Automatisierungsgerät diese Quittung abtastet bzw. empfängt. Dabei lässt das zweite Automatisierungsgerät sein Prozessabbild solange unverändert, bis das erste Automatisierungsgerät neue Prozess-Ausgangs-Daten als Ausgangs-Prozess-Abbild zum zweiten Automatisierungsgerät sendet.

In einer weiteren Ausgestaltung des Verfahrens wird mit Aussenden der Bereitschaft-Quittung ein erster Timer mit einer ersten Laufzeit in der zweiten Sende-Empfangs-Anwendung gestartet und mittels des ersten Timers wird überwacht, ob innerhalb der ersten Laufzeit die Kommunikation durch das erste Automatisierungsgerät wieder neu gestartet wurde und dadurch neue Prozess-Ausgangs-Daten als neues Ausgangs-Prozess-Abbild zum zweiten Automatisierungsgerät geschickt worden sind. Wenn das der Fall ist, dann reagiert das zweite Automatisierungsgerät mit einer Fertig-Quittung und stoppt den ersten Timer. Die Zeitüberwachung in dem ersten Timer wird als sogenannter Watch Dog eingesetzt und sollte die Fertig-Quittung nicht in der ersten Laufzeit des ersten Timers angekommen sein, so wird ein Fehler erzeugt und es werden beispielsweise sichere Ersatzwerte bereitgestellt oder es wird ein sicherer Zustand eingenommen.

Um die Sicherheit weiterhin zu verbessern, wird nach Empfang der Bereitschafts-Quittung im ersten Automatisierungsgerät ein zweiter Timer mit einer zweiten Laufzeit in der ersten Sende-Empfangs-Anwendung gestartet und mittels des zweiten Timers wird überwacht, ob innerhalb der zweiten Laufzeit die Fertig-Quittung empfangen wurde. Auch hier gilt wieder die Zeitüberwachung wird als eine Watch Dog Funktion eingesetzt und ist der Timer vor Eintreffen der Fertig-Quittung abgelaufen, so wird eine Fehlerreaktion erzeugt und/oder Ersatzwerte bereitgestellt.

Weiterhin ist es von Vorteil, wenn die Fertig-Quittung gleich neue Prozess-Eingangs-Daten als neues Eingangs-Prozess-Abbild für das erste Automatisierungsgerät umfasst.

Als wesentlicher Vorteil wird angesehen, dass das Verfahren zur Durchführung der Konfigurationsänderungen in einem industriellen Anlagensystem zur Steuerung des sicherheitskritischen Prozesses gemäß den vorgenannten Lösungsmerkmalen eingesetzt wird, wobei dadurch während der Konfigurationsänderung ein unterbrechungsfreier Anlagenbetrieb ermöglicht wird.

Eine weitere die Kommunikationssicherheit erhöhende Maßnahme wird darin gesehen, dass nach dem Neustart der Kommunikation zusätzlich zu den gesendeten neuen Prozess-Ausgangs-Daten eine Signatur über die neuen Kommunikationsparameter gebildet wird und diese Signatur mit zum zweiten Automatisierungsgerät gesendet wird, und im zweiten Automatisierungsgerät die gesendete Signatur mit einer im zweiten Automatisierungsgerät über die neuen Kommunikationsparameter gebildeten Signatur verglichen wird. Wenn der Vergleich positiv ausgefallen ist, dann wird das Prozess-Abbild verändert, andererseits bleibt es so oder es wird eine Sicherheitsaktion eingeleitet, weil aufgrund einer veränderten Signatur möglicherweise ein Übertragungsfehler erkannt wurde.

Wie eingangs genannt wird die Aufgabe ebenfalls durch das industrielle Anlagensystem dadurch gelöst, dass das erste Automatisierungsgerät ausgestaltet ist, von dem Konfigurationssystem eine Anforderung zur Parameteränderung zu erhalten und diese an das zweite Automatisierungsgerät zur Parameteränderung schickt, dabei ist das zweite Automatisierungsgerät ausgestaltet, auf die Anforderung derart zu reagieren, dass eine Bereitschafts-Quittung auf die Anforderung gesendet wird, weiterhin ist das zweite Automatisierungsgerät ausgestaltet, unverzüglich mit dem Zeitpunkt der Aussendung der Bereitschafts-Quittung ein Ausgangs-Prozess-Abbild einzufrieren, wodurch die am zweiten Automatisierungsgerät zuletzt ausgegebenen Prozess-Ausgangs-Daten auf ihren letzten Wert gehalten werden und die Änderung der Kommunikationsparameter für das zweite Automatisierungsgerät zu veranlassen und weiterhin ist das erste Automatisierungsgerät dazu ausgestaltet, nach Empfang der Bereitschafts-Quittung im ersten Automatisierungsgerät unverzüglich die Kommunikation abzubauen und die Änderung der Kommunikationsparameter für das erste Automatisierungsgerät durchzuführen, weiterhin ausgestaltet ein erstes Eingangs-Prozess-Abbild einzufrieren, wodurch die am ersten Automatisierungsgerät zuletzt anliegenden Prozess-Eingangs-Daten auf ihren Wert gehalten werden, und weiterhin nach abgeschlossener Änderung der Kommunikationsparameter im ersten Automatisierungsgerät, die Kommunikation neu aufzubauen und neue Ausgangs-Daten als Ausgangs-Prozess-Abbild zum zweiten Automatisierungsgerät zu senden.

Als Konfigurationssystem kommt beispielsweise ein Engineering-System, insbesondere ein Engineering-System der Firma Siemens AG mit den Namen "TIA-Portal", zum Einsatz. Mit diesem Engineering-System können funktional sichere Module parametriert und projektiert werden. Beispielsweise werden in dem Bereich der Kommunikationsparameter F-Parameter, wie eine F-Überwachungszeit, eine F-Zieladresse, ein Verhalten nach Kanalfehlern oder eine F-Peripherie-DB-Nummer parametriert oder eingestellt.

Als wesentlicher Vorteil wird angesehen, dass eine Parametrierung im laufenden Betrieb einer Anlage erfolgen kann und somit ein stoßfreies Umparametrieren der Kommunikationsverbindung ermöglicht wird. Dabei spielt die Abarbeitung der Parameteränderung in den beiden Automatisierungsgeräten eine wesentliche Rolle. Erfindungsgemäß kann diese Abarbeitung nämlich wesentlich früher beginnen, als es im Stand der Technik bekannt ist. Des Weiteren ist eine softwaretechnische Implementierung des neuen Verfahrens einfacher als im Stand der Technik.

Weiterhin ist es vorteilhaft, dass das Anlagensystem derart ausgestaltet ist, dass die zweite Sende-Empfangs-Anwendung einen ersten Timer aufweist, und ausgestaltet ist zum Zeitpunkt des Aussendens der Bereitschafts-Quittung den ersten Timer zu starten und zu überwachen, ob innerhalb einer ersten Laufzeit die Kommunikation durch das erste Automatisierungsgerät neu gestartet wurde.

Weiterhin weist die erste Sende-Empfangs-Anwendung einen zweiten Timer auf, und ist ausgestaltet zum Zeitpunkt des Empfangs der Bereitschafts-Quittung den zweiten Timer zu starten und zu überwachen, ob innerhalb einer zweiten Laufzeit eine Fertig-Quittung empfangen wird. Auch ist das erste Automatisierungsgerät bzw. die erste Sende-Empfangs-Anwendung dazu ausgestaltet, nach dem Neustart der Kommunikation zusätzlich zu den gesendeten neuen Prozess-Ausgangs-Daten eine Signatur über die neuen Kommunikationsparameter zu bilden und diese Signatur mit zum zweiten Automatisierungsgerät gesendet wird, und im zweiten Automatisierungsgerät die gesendete Signatur mit einer im zweiten Automatisierungsgerät über die neuen Kommunikationsparameter gebildeten zweiten Signatur verglichen wird, dabei ist dementsprechend die zweite Sende-Empfangs-Anwendung für diesen Vergleich ausgestaltet und kann durch die Kenntnis der neuen Kommunikationsparameter und das Bilden einer zweiten Signatur eine Erwartungshaltung bezüglich der neuen Parameter erzeugen und sollte die Erwartungshaltung nicht übereinstimmen so wird eine Fehlerreaktion generiert.

Gemäß der Zeichnung wird ein Ausführungsbeispiel der Erfindung vorgestellt. Es zeigt:
- FIG 1: einen Verfahrensablauf zur Kommunikationsänderung von Kommunikationsparametern nach dem Stand der Technik,
- FIG 2: den Verfahrensablauf gemäß der Erfindung,
- FIG 3: ein erstes und ein zweites Automatisierungsgerät mit einem angeschlossenen Konfigurationssystem,
- FIG 4: einen Sequenzablauf für das Einleiten einer Konfigurationsänderung im laufenden Betrieb und
- FIG 5: einen Sequenzablauf für die Konfigurationsänderung im laufenden Betrieb mit detaillierten Quittungs-Ereignissen.

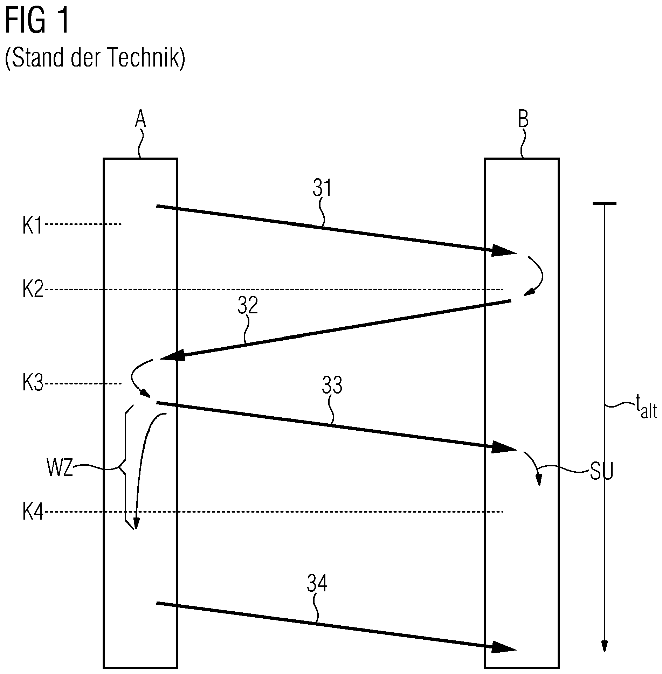

Gemäß FIG 1 ist ein prinzipieller Verfahrensablauf für eine Konfigurationsänderung zwischen einem ersten Automatisierungsgerät A und einem zweiten Automatisierungsgerät B nach dem Stand der Technik dargestellt. Mit gestrichelten Linien sind eine erste Wissensebene K1, eine zweite Wissensebene K2, eine dritte Wissensebene K3 und eine vierte Wissensebene K4 dargestellt. Bildlich gesprochen kann man sagen, dass in der ersten Wissensebene K1 das erste Automatisierungsgerät A weis, dass es eine Nachricht abgesendet hat und das es umparametrieren will. In der zweiten Wissensebene K2 weis das zweite Automatisierungsgerät B, dass das erste Automatisierungsgerät A die Absicht hat, umzuparametrieren. In der dritten Wissensebene K3 weis das erste Automatisierungsgerät A, dass das zweite Automatisierungsgerät B die Nachricht erhalten hat, dass das erste Automatisierungsgerät A umparametrieren will. In der vierten Wissensebene K4 weis das zweite Automatisierungsgerät B, dass das erste Automatisierungsgerät A weis, dass das zweite Automatisierungsgerät B die Nachricht erhalten hat, dass das erste Automatisierungsgerät A umparametrieren will.

Das erste Automatisierungsgerät A sendet eine Anforderung 31 zur Parameteränderung an das zweite Automatisierungsgerät B. Das zweite Automatisierungsgerät B reagiert darauf mit der Aussendung einer Bereitschafts-Quittung 32. Daraufhin sendet das erste Automatisierungsgerät A eine Quittungs-Quittung 33 nach Empfang der Quittungs-Quittung 33 im Automatisierungsgerät A wird die Aktion Start der Umparametrierung SU ausgeführt. Mit Aussendung der Quittungs-Quittung 33 wird im ersten Automatisierungsgerät A eine Wartezeit WZ gestartet. Nach Ablauf der Wartezeit WZ wird ein neuer Verbindungsaufbau 34 von dem ersten Automatisierungsgerät A zu dem zweiten Automatisierungsgerät B durchgeführt. Eine bisherige Umparametrierungszeit tₐₗₜ läuft von dem Aussenden der Anforderung 31 bis zum Empfangen des neuen Verbindungsaufbaus 34 und ist für das erwünschte stoßfreie Umparametrieren während des Anlagenbetriebs zu lang.

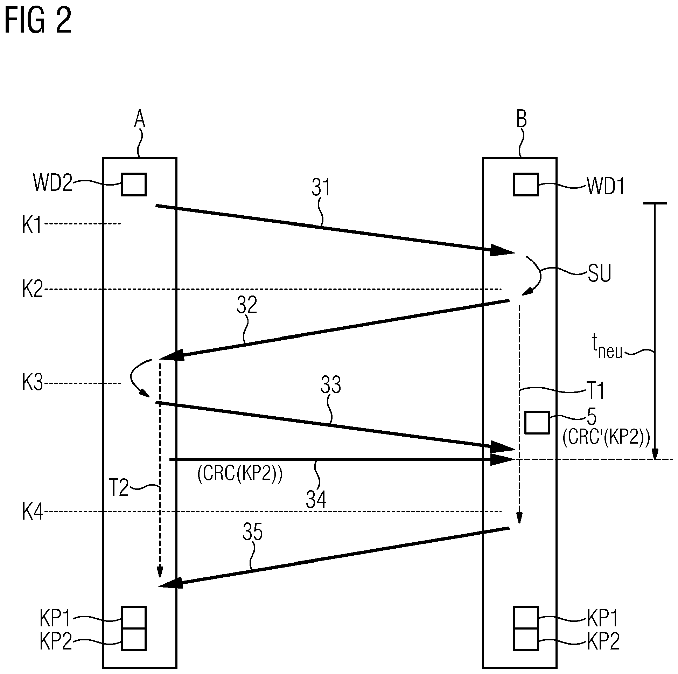

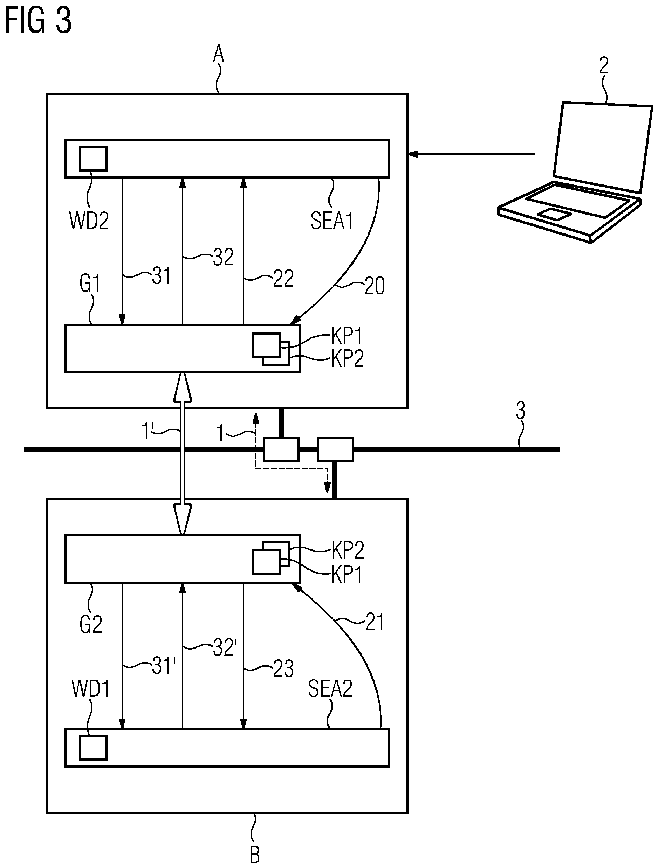

Gemäß FIG 2 wird nun aufgezeigt, dass erfindungsgemäß die bisherige Umparametrierungszeit tₐₗₜ in eine verbesserte neue verkürzte Umparametrierungszeit tₙₑᵤ umgesetzt werden kann. Die bisherige fest eingestellte Wartezeit WZ (siehe FIG 1) fällt nun weg. Bei dem Verfahren zu Konfigurationsänderungen von Kommunikationsparametern einer auf funktionale Sicherheit ausgelegten Kommunikationsverbindung 1,1' (siehe FIG 3) zwischen dem ersten Automatisierungsgerät A und dem zweiten Automatisierungsgerät B sendet das erste Automatisierungsgerät A an das zweite Automatisierungsgerät B eine Anforderung 31 zur Parameteränderung und das zweite Automatisierungsgerät B reagiert auf die Anforderung 31 mit einer Bereitschafts-Quittung 32.

Unverzüglich mit der Aussendung der Bereitschafts-Quittung 32 wird im zweiten Automatisierungsgerät B ein Ausgangsprozessabbild eingefroren, wodurch die am zweiten Automatisierungsgerät B zuletzt ausgegebene Prozess-Ausgangs-Daten OV auf ihren letzten Wert gehalten werden. Die Änderung der Kommunikationsparameter von den ersten Kommunikationsparametern KP1 auf die zweiten Kommunikationsparameter KP2 wird nun für das zweite Automatisierungsgerät B durchgeführt. Das erste Automatisierungsgerät A beginnt nun nach Empfang der Bereitschafts-Quittung 32 im ersten Automatisierungsgerät A damit unverzüglich die Kommunikation abzubauen und die Änderung der Kommunikationsparameter für das erste Automatisierungsgerät A durchzuführen. Dabei wird ebenfalls im ersten Automatisierungsgerät A ein Eingangsprozessabbild eingefroren, wodurch die am ersten Automatisierungsgerät A zuletzt anliegenden Prozess-Eingangs-Daten IV auf ihrem letzten Wert gehalten werden. Ist die Änderung der Kommunikationsparameter von KP1 auf KP2 im ersten Automatisierungsgerät A abgeschlossen, so baut dieses die Kommunikation neu auf. Es wird ein neuer Verbindungsaufbau 34 abgesetzt. Dabei werden neue Prozess-Ausgangs-Daten OV als Ausgangsprozessabbild zum zweiten Automatisierungsgerät B gesendet, wodurch die am zweiten Automatisierungsgerät B zuletzt ausgegebenen Prozess-Ausgangs-Daten OV durch aktualisierte Prozess-Ausgangs-Daten OV ersetzt werden. Ein Vergleich zwischen der FIG 1 und der FIG 2 mit den Zeiten für die Umparametrierung ergibt, dass die verkürzte Umparametrierungszeit tₙₑᵤ nun weniger Zeit in Anspruch nimmt als die alte bisherige Umparametrierungszeit tₐₗₜ, wodurch eine Umparametrierung in Runtime stoßfrei erfolgen kann.

Durch die Hinzunahme von Watchdog Funktionalitäten in Form eines ersten Timers WD1 und eines zweiten Timers WD2 wird die funktionale Sicherheit weiterhin erhöht. Mit Aussenden der Bereitschafts-Quittung 32 wird ein erster Timer WD1 mit einer ersten Lautzeit T1 in der zweiten Sende-Empfangs-Anwendung SEA2 gestartet und mittels des ersten Timers WD1 wird überwacht, ob innerhalb der ersten Laufzeit T1 die Kommunikation durch das erste Automatisierungsgerät A neu gestartet wurde und dadurch auch neue Prozess-Ausgangs-Daten OV als neues Ausgangs-Prozess-Abbild zum zweiten Automatisierungsgerät B geschickt worden sind und wenn dass der Fall ist, dann reagiert das zweite Automatisierungsgerät B mit einer Fertig-Quittung 35 und die stoppt den ersten Timer WD1.

Nach Empfang der Bereitschafts-Quittung 32 im ersten Automatisierungsgerät A wird ein zweiter Timer WD2 mit einer zweiten Laufzeit T2 in der ersten Sende-Empfangs-Anwendung SEA1 gestartet und mittels des zweiten Timers WD2 wird überwacht, ob innerhalb der zweiten Laufzeit T2 die Fertig-Quittung 35 empfangen wurde.

Nach dem Neustart der Kommunikationsverbindung 34 wird zusätzlich zu den gesendeten neuen Prozess-Ausgangs-Daten OV eine Signatur CRC über die neuen Kommunikationsparameter gebildet und diese Signatur CRC wird mit zum zweiten Automatisierungsgerät B gesendet. Im zweiten Automatisierungsgerät B wird die gesendete Signatur CRC mit einer im zweiten Automatisierungsgerät B über die neuen Kommunikationsparameter gebildeten zweiten Signatur CRC' verglichen. Wenn der Vergleich positiv ist, dann wird das Prozessabbild verändert andererseits bleibt es so oder es wird eine Sicherheitsaktion eingeleitet oder es werden sichere Ersatzwerte bereitgestellt, weil ein Fehler erkannt wurde.

Dadurch, dass dem zweiten Automatisierungsgerät B die zu ändernden Kommunikationsparameter bereits im Vorfeld mitgeteilt wurden, kann es ebenfalls für sich über die zweiten Kommunikationsparameter KP2 eine zweite Signatur CRC' bilden, somit hat es quasi eine Erwartungshaltung erzeugt und wenn diese nicht mit der gesendeten Signatur CRC der zweiten Kommunikationsparameter KP2 vom ersten Automatisierungsgerät A übereinstimmt, so muss ein Fehler aufgetreten sein.

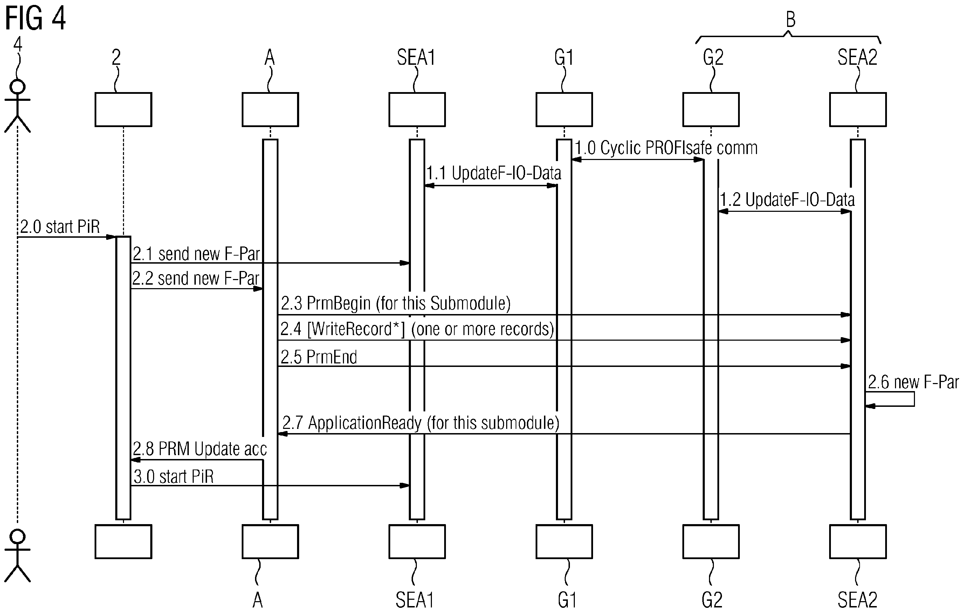

Gemäß FIG 3 ist eine Übersicht in Form eines Blockschaltbildes dargestellt, über ein Konfigurationssystem 2 können Kommunikationsparameter während des Betriebes ausgetauscht werden. Das Konfigurationssystem 2 ist mit dem ersten Automatisierungsgerät A verbunden und schickt eine Anforderung (siehe auch FIG 4) zur Parameteränderung an das erste Automatisierungsgerät A. Das erste Automatisierungsgerät A und das zweite Automatisierungsgerät B stehen über einen Feldbus 3 miteinander in Verbindung.

Das erste Automatisierungsgerät A weist eine erste Sende-Empfangs-Anwendung SEA1 und einen ersten Gerätetreiber G1 auf. Das zweite Automatisierungsgerät B weist eine zweite Sende-Empfangs-Anwendung SEA2 und einen zweiten Gerätetreiber G2 auf. Das an das erste Automatisierungsgerät A angeschlossene Konfigurationssystem 2 ist ausgestaltet die jeweiligen Sende-Empfangs-Anwendungen SEA1,SEA2 und die jeweiligen Gerätetreiber G1,G2 mit einem ersten Satz von Konfigurationsparametern KP1 zu konfigurieren und für eine Änderung die jeweiligen Sende-Empfangs-Anwendungen SEA1,SEA2 und die jeweiligen Gerätetreiber G1,G2 mit einem zweiten Satz von Konfigurationsparametern KP2 zu konfigurieren.

Das erste Automatisierungsgerät A ist ausgestaltet, von den Konfigurationssystem 2 eine Anforderung 31 zur Parameteränderung zu erhalten und diese an das zweite Automatisierungsgerät B zur Parameteränderung zu schicken. Das zweite Automatisierungsgerät B ist ausgestaltet auf die Anforderung 31 derart zu reagieren, dass eine Bereitschafts-Quittung 32 auf die Anforderung 31 gesendet wird.

Für die Umparametrierung ist das zweite Automatisierungsgerät B dazu ausgestaltet, unverzüglich mit dem Zeitpunkt der Aussendung der Bereitschafts-Quittung 32' ein Ausgangs-Prozess-Abbild einzufrieren, wodurch die am zweiten Automatisierungsgerät B zuletzt ausgegebenen Prozess-Ausgangs-Daten OV auf ihren letzten Wert gehalten werden. Nun werden die Konfigurationsparameter von KP1 auf KP2 geändert.

Das erste Automatisierungsgerät A ist dazu ausgestaltet, nach Empfang der Bereitschafts-Quittung 32 bzw. 32' im ersten Automatisierungsgerät A unverzüglich die Kommunikation abzubauen und die Änderung der Kommunikationsparameter von KP1 auf KP2 zu veranlassen. Dabei wird das Eingangs-Prozess-Abbild eingefroren, wodurch die am ersten Automatisierungsgerät A zuletzt angegebenen Prozess-Eingangs-Daten IV auf ihren letzten Wert gehalten werden. Nach abgeschlossener Änderung der Kommunikationsparameter im ersten Automatisierungsgerät A wird die Kommunikation neu gestartet und neue Prozess-Ausgangs-Daten OV werden zum zweiten Automatisierungsgerät B gesendet. Für eine WatchDog Funktionalität weist das erste Automatisierungsgerät A einen zweiten Timer WD2 und das zweite Automatisierungsgerät B einen ersten Timer WD1 auf.

Mit der FIG 4 soll eine Ablauf-Sequenz von Telegrammen und Anforderungen zwischen dem ersten Automatisierungsgerät A und dem zweiten Automatisierungsgerät B für eine Konfigurationsänderung während des Betriebs bzw. für eine Parameteränderung in Runtime (PiR) verdeutlicht werden. Ein Benutzer 4 stößt über das Konfigurationssystem 2 mit dem Befehl Start_PiR 2.0 einen Start einer Parameteränderung an. Daraufhin werden neue F-Parameter zum ersten Automatisierungsgerät A und zur ersten Sende-Empfangs-Anwendung SEA1 geschickt, send_new F-Par 2.1 send_new F-Par 2.2. Das erste Automatisierungsgerät A weis nun, dass es umparametriert werden soll und sendet an das zweite Automatisierungsgerät B, insbesondere an die zweite Empfangs-Anwendung SEA2 einen Befehl PrmBegin (for this submodul) 2.3, auch wird ein neuer Datensatz gesendet Write_Record (one or more records) 2.4 dann wird der Befehl PrmEnd 2.5 abgesetzt.

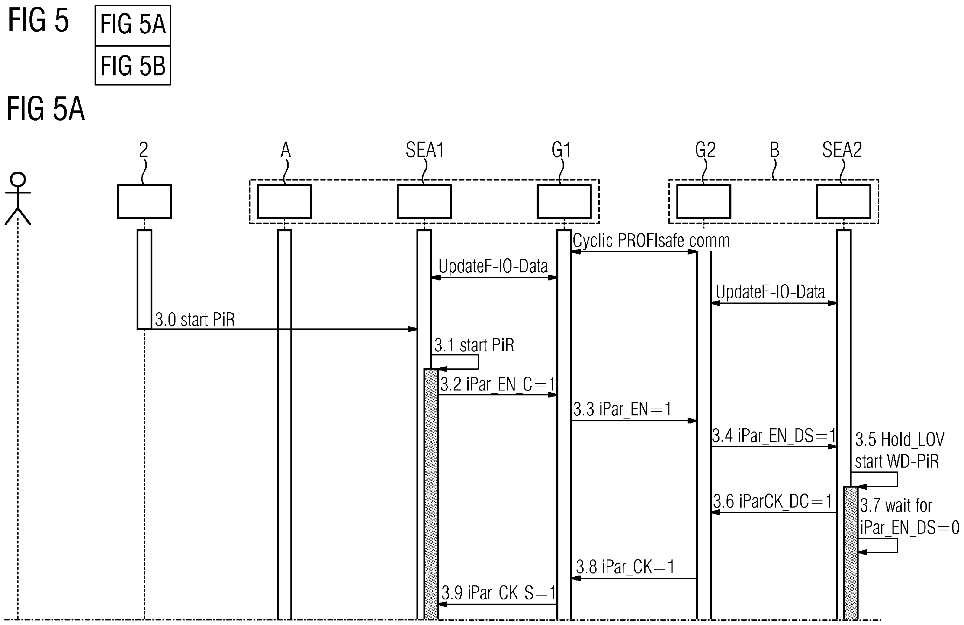

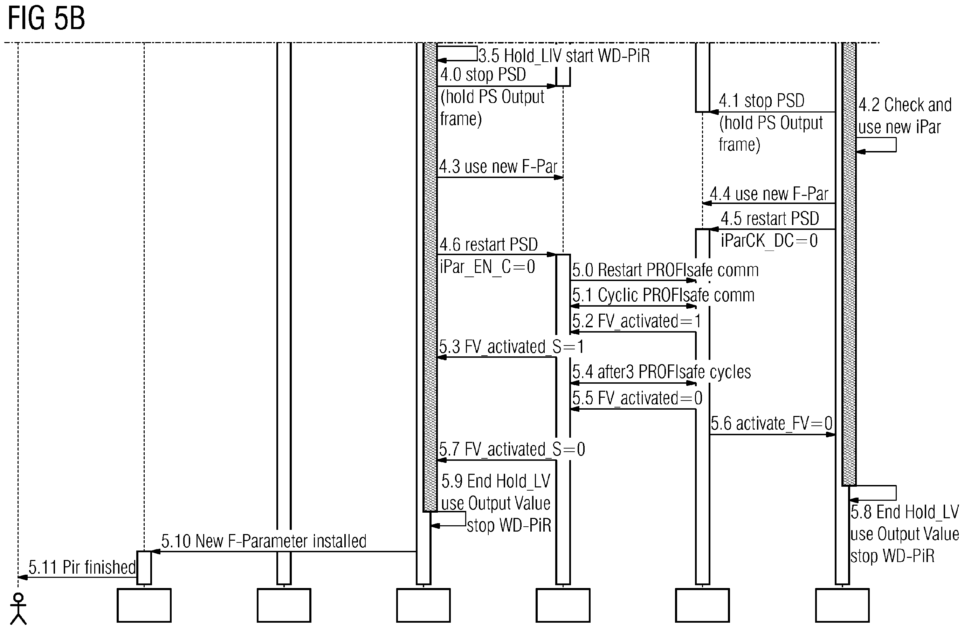

Das zweite Automatisierungsgerät B bzw. die zweite Sende-Empfangs-Anwendung SEA2 reagiert darauf mit dem Wissen New_F-Par 2.6 und sendet einen Befehl Application_Ready (for this submodul) 2.7 zum ersten Automatisierungsgerät A zurück. Das erste Automatisierungsgerät A wiederum sendet einen Befehl PRM_Update accepted 2.8 an das Konfigurationssystem 2 zurück. Dieses kann nun den eigentlichen start PiR 3.0 der Umparametrierung veranlassen. Der Vorgang der Umparametrierung start PiR 3.0 wird mit der FIG 5 im Detail erläutert.

Gemäß FIG 5 wird aufgezeigt, wie die Umparametrierung nach dem Startbefehl Start PIR 3.0 durch das Konfigurationssystem 2 von statten geht.

Das erste Automatisierungsgerät A ist gestrichelt gezeichnet und zeigt die Zusammenfassung der ersten Sende-Empfangs-Anwendung SEA1 und des ersten Gerätetreibers G1. Das zweite Automatisierungsgerät B ist ebenfalls gestrichelt gezeichnet und zeigt die zweite Sende-Empfangs-Anwendung SEA1 und den zweiten Gerätetreiber G2. Das erste Automatisierungsgerät A bzw. die erste Sende-Empfangs-Anwendung SEA1 erhält nun den Startbefehl für die Umparametrierung start PiR 3.0 und reagiert damit intern mit einer Reaktion start PiR 3.1 daraufhin wird der Befehl iPar_EN_C=1 3.2 abgeschickt, welches bedeutet, eine Parameteränderung wird nun ermöglicht. Dies wird durch den ersten Gerätetreiber G1 nochmals weitergeleitet durch iPar_EN=1 3.1 und die Befähigung bzw. der Befehl für die Ermöglichung der Parameteränderung wird an den zweiten Gerätetreiber G2 des zweiten Automatisierungsgerätes B weitergeleitet. Der zweite Gerätetreiber G2 informiert intern die zweite Sende-Empfangs-Anwendung SEA2 über die Parameteränderung mit dem Befehl iPar_EN_DS=1 3.4, nun veranlasst die zweite Sende-Empfangs-Anwendung SEA2 das einfrieren der Prozess-Ausgangs-Werte OV mit dem Befehl Hold_LOV Start WD-PiR 3.5. Die zweite Sende-Empfangs-Anwendung quittiert dies mit iPar_OK_DC=1 3.6. Der Start WD-PiR Befehl startet den ersten Timer WD1.

Die zweite Sende-Empfangs-Anwendung SEA2 anwortet mit einer Quittung auf die Möglichkeit der Umparametrierung iPar_EN_DE=1 mit iPar_OK_DC=1 3.6. Das zweite Automatisierungsgerät B verweilt nun in einem Wartezustand Wait for iPar_EN_DS=0 3.7.

Der zweite Gerätetreiber G2 sendet zu dem ersten Gerätetreiber G1 ein iPar_OK=1 3.8. Der erste Gerätetreiber G1 reagiert daraufhin mit einem Sendebefehl zur ersten Sende-Empfangs-Anwendung SEA1 und sendet diesem iPar=OK_S=1 3.9. Von nun an werden die Prozess-Eingangswerte IV mit dem Befehl Hold Last Input-Value (LIV) or use FV and start WD-PiR 3.10. Der zweite Timer W2 wird nun für die mit FIG 2 erklärte Überwachungszeit gestartet.

Mit einem Befehl Stop PSD wird der Profisafe Treiber PSD gestoppt und damit wird die Profisafe Kommunikation ebenfalls gestoppt. Auf der Seite des zweiten Automatisierungsgerätes B wird mit dem Befehl Stop PSD 4.1 auch auf der Seite im zweiten Gerätetreiber G2 der Profisafe Treiber gestoppt. Auf der Seite des zweiten Automatisierungsgerätes B kann nun die Prüfung der neuen Parameter und die Benutzung der neuen Parameter mit dem Befehl Check and use new iPar 4.2 durchgeführt werden. Ebenfalls werden auf der Seite des ersten Automatisierungsgerätes A mit dem Befehl Use new F-Par 4.3 die neuen Konfigurationsparameter benutzt. Auf beiden Seiten, nämlich auf der Seite des ersten Automatisierungsgerätes A und auf der Seite des zweiten Automatisierungsgerätes B kann nun der jeweilige Profisafe Treiber erneut gestartet werden. Dies passiert auf der Seite des zweiten Automatisierungsgerätes B mit dem Befehl Restart PSD, iParOK_DE=0 4.5 und auf der Seite des ersten Automatisierungsgerätes A mit dem Befehl Restart PSD, iPar_EN_C=0 4.6.

Dann wird, ausgehend von der Seite des ersten Automatisierungsgerätes A, ein Verbindungs-Neustart mit dem Befehl Restart PROFIsafe comm 5.0 durchgeführt. Die Seite des zweiten Automatisierungsgerätes B reagiert mit einer zyklischen Profisafe Kommunikation Cyclic PROFIsafe comm 5.1. Für den Fall, dass Ersatzwerte, nämlich Fehler Values FV genutzt worden sind, werden diese mit dem Befehl FV_activated=0 nun zurückgesetzt. Dies passiert mit 5.6 zur Seite des zweiten Automatisierungsgerätes B und mit 5.7 zur Seite des ersten Automatisierungsgerätes A. Abschließend werden mit dem Befehl End Hold_LV use Input-Value stop WD-PiR 5.9 die neuen Werte in der zyklischen Kommunikation wieder eingebunden und abschließend wird dem User 4 über sein Konfigurationssystem 2 die Mitteilung gegeben New F-Parameter installed 5.10. Damit ist die Umparametrierung in Runtime mit PiR finished 5.11 beendet.

Für die FIG 4 und die FIG 5 ist zu bemerken, dass die Umparametrierung stoßfrei zwischen der zyklischen Kommunikation, wie man sie beispielsweise in FIG 4 oberhalb sieht, mit 1.0,1.2 und 1.1 durchgeführt wird.

## Patentansprüche

1. Verfahren zur Konfigurationsänderungen von Kommunikationsparametern einer auf funktionale Sicherheit ausgelegten Kommunikationsverbindung (1,1') zwischen einem ersten Automatisierungsgerät (A) und einem zweiten Automatisierungsgerät (B),
- wobei zum Austausch von Daten von dem ersten Automatisierungsgerät (A) zu dem zweiten Automatisierungsgerät(B) und umgekehrt, ein Sicherheitsprotokoll verwendet wird, wobei
- die Daten als Prozess-Ausgangs-Daten (OV) bzw. als Prozess-Eingangs-Daten (IV) für einen sicherheitskritischen Prozess dienen,
- auf dem ersten Automatisierungsgerät (A) eine erste Sende-Empfangs-Anwendung (SEA1) abläuft, welche zusammen mit einem ersten Gerätetreiber (G1) die Kommunikation durchführt, und
- auf dem zweiten Automatisierungsgerät (B) eine zweite Sende-Empfangs-Anwendung (SEA2) abläuft, welche zusammen mit einem zweiten Gerätetreiber (G2) die Kommunikation durchführt, wobei
- die jeweiligen Sende-Empfangs-Anwendungen (SEA1,SEA2) und die jeweiligen Gerätetreiber (G1,G2) vor dem Ändern mit einem ersten Satz von Kommunikationsparametern (KP1) und nach dem Ändern mit einem zweiten Satz von Kommunikationsparametern (KP2) arbeiten **dadurch gekennzeichnet, dass**
- das erste Automatisierungsgerät (A) an das zweite Automatisierungsgerät (B) eine Anforderung (31) zur Parameteränderung schickt und das zweite Automatisierungsgerät (B) auf die Anforderung derart reagiert, dass
- eine Bereitschafts-Quittung (32) auf die Anforderung (31) gesendet wird, dabei wird unverzüglich mit der Aussendung der Bereitschafts-Quittung (32) im zweiten Automatisierungsgerät (B)
- ein Ausgangs-Prozessabbild eingefroren, wodurch die am zweiten Automatisierungsgerät (B) zuletzt ausgegebenen Prozess-Ausgangs-Daten (OV) auf ihren letzten Wert gehalten werden, und
- die Änderung der Kommunikationsparameter für das zweite Automatisierungsgerät (B) wird durchgeführt, und weiterhin
- das erste Automatisierungsgerät (A) derart reagiert, dass
- nach Empfang der Bereitschafts-Quittung (32) im ersten Automatisierungsgerät (A) unverzüglich die Kommunikation angehalten wird und die Änderung der Kommunikationsparameter für das erste Automatisierungsgerät (A) durchgeführt wird, wobei
- ein Eingangs-Prozessabbild eingefroren wird, wodurch die
- am ersten Automatisierungsgerät (A) zuletzt anliegenden Prozess-Eingangs-Daten (IV) auf ihren letzten Wert gehalten werden,
- wenn die Änderung der Kommunikationsparameter im ersten Automatisierungsgerät (A) abgeschlossen ist, dieses die Kommunikation neu startet und neue Prozess-Ausgangs-Daten (OV) als Ausgangs-Prozessabbild zum zweiten Automatisierungsgerät (B) sendet, wodurch die am zweiten Automatisierungsgerät (B) zuletzt ausgegebenen Prozess-Ausgangs-Daten (OV) durch aktualisierte Prozess-Ausgangs-Daten (OV) ersetzt werden.

2. Verfahren nach Anspruch 1, wobei mit Aussenden der Bereitschafts-Quittung (32) ein erster Timer (WD1) mit einer ersten Laufzeit (T1) in der zweiten Sende-Empfangs-Anwendung (SEA2) gestartet wird und mittels des ersten Timers (WD1) überwacht wird, ob innerhalb der ersten Laufzeit (T1) die Kommunikation durch das erste Automatisierungsgerät (A) neu gestartet wurde und dadurch neue Prozess-Ausgangs-Daten (OV) als neues Ausgangs-Prozessabbild zum zweiten Automatisierungsgerät (B) geschickt wurden und wenn dass der Fall ist, dann reagiert das zweite Automatisierungsgerät (A) mit einer Fertig-Quittung (35) und stoppt den ersten Timer (WD1).

3. Verfahren nach Anspruch 1 oder 2, wobei nach Empfang der Bereitschafts-Quittung (32) im ersten Automatisierungsgerät (A) ein zweiter Timer (WD2) mit einer zweiten Laufzeit (T2) in der ersten Sende-Empfangs-Anwendung (SAE1) gestartet wird und mittels des zweiten Timers (WD2) überwacht wird, ob innerhalb der zweiten Laufzeit (T2) die Fertig-Quittung (35) empfangen wurde.

4. Verfahren nach Anspruch 3, wobei die Fertig-Quittung (35) neue Prozess-Eingangs-Daten (IV) als neues Eingangs-Prozessabbild für das erste Automatisierungsgerät (A) umfasst.

5. Verfahren zur Durchführung der Konfigurationsänderungen in einem industriellen Anlagensystem zur Steuerung des sicherheitskritischen Prozesses nach einem der Ansprüche 1 bis 4, wobei dadurch während der Konfigurationsänderungen ein unterbrechungsfreier Anlagenbetrieb ermöglicht wird.

6. Verfahren nach einem der Ansprüche 1 bis 5, wobei nach dem Neustart der Kommunikation zusätzlich zu den gesendeten neuen Prozess-Ausgangs-Daten (OV) eine Signatur über die neuen Kommunikationsparameter gebildet wird und diese Signatur mit zum zweiten Automatisierungsgerät (B) gesendet wird, und im zweiten Automatisierungsgerät (B) die gesendete Signatur (CRC) mit einer im zweiten Automatisierungsgerät (B) über die neuen Kommunikationsparameter gebildeten Signatur (CRC') verglichen wird.

7. Industrielles Anlagensystem zur Steuerung eines sicherheitskritischen Prozesses mit einem ersten Automatisierungsgerät (A) und einem zweiten Automatisierungsgerät (B), welche über einen Feldbus (3) miteinander verbunden sind,
- das erste Automatisierungsgerät (A) eine erste Sende-Empfangs-Anwendung (SEA1) und einen ersten Gerätetreiber (G1) aufweist,
- das zweite Automatisierungsgerät (B) eine zweite Sende-Empfangs-Anwendung (SEA2) und einen zweiten Gerätetreiber (G2) aufweist,
- weiterhin ein Konfigurationssystem (2) vorhanden ist, welches ausgestaltet ist die jeweiligen Sende-Empfangs-Anwendungen (SEA1,SEA2) und die jeweiligen Gerätetreiber (G1,G2) mit einem ersten Satz von Kommunikationsparametern (KP1) zu konfigurieren und für eine Änderung die jeweiligen Sende-Empfangs-Anwendungen (SEA1, SEA2) und die jeweiligen Gerätetreiber (G1,G2) mit einem zweiten Satz von Kommunikationsparametern (KP2) zu konfigurieren **dadurch gekennzeichnet, dass**
- das erste Automatisierungsgerät (A) ausgestaltet ist von dem Konfigurationssystem (2) eine Anforderung (31) zur Parameteränderung zu erhalten und diese an das zweite Automatisierungsgerät (B) zur Parameteränderung schickt, dabei ist
- das zweite Automatisierungsgerät (B) ausgestaltet auf die Anforderung (31) derart zu reagieren, dass eine Bereitschafts-Quittung (32) auf die Anforderung (31) gesendet wird, weiterhin ist das zweite Automatisierungsgerät (B) ausgestaltet unverzüglich mit dem Zeitpunkt der Aussendung der Bereitschafts-Quittung (32)
- Ein Ausgangs-Prozessabbild einzufrieren, wodurch die am zweiten Automatisierungsgerät (B) zuletzt ausgegebenen Prozess-Ausgangs-Daten (OV) auf ihren letzten Wert gehalten werden, und
- die Änderung der Kommunikationsparameter für das zweite Automatisierungsgerät (B) zu veranlassen, und weiterhin ist
- das erste Automatisierungsgerät (A) dazu ausgestaltet
- nach Empfang der Bereitschafts-Quittung (32) im ersten Automatisierungsgerät (A) unverzüglich die Kommunikation anzuhalten und die Änderung der Kommunikationsparameter für das erste Automatisierungsgerät (A) durchzuführen,
- ein Eingangs-Prozessabbild einzufrieren, wodurch die am ersten Automatisierungsgerät (A) zuletzt anliegenden Prozess-Eingangs-Daten (IV) auf ihren letzten Wert gehalten werden,
- nach abgeschlossener Änderung der Kommunikationsparameter im ersten Automatisierungsgerät (A), die Kommunikation neu gestartet wird, aufzubauen und neue Prozess-Ausgangs-Daten (OV) als Ausgangs-Prozessabbild zum zweiten Automatisierungsgerät (B) zu senden.

8. Anlagensystem nach Anspruch 7, wobei die zweite Sende-Empfangs-Anwendung (SEA2) einen ersten Timer (WD1) aufweist, und ausgestaltet ist zum Zeitpunkt des Aussendens der Bereitschafts-Quittung (32) den ersten Timer (WD1) zu starten und zu überwachen, ob innerhalb einer ersten Laufzeit (T1) die Kommunikation durch das erste Automatisierungsgerät (A) neu gestartet wurde.

9. Anlagensystem nach Anspruch 8, wobei die erste Sende-Empfangs-Anwendung (SEA2) einen zweiten Timer (WD2) aufweist, und ausgestaltet ist zum Zeitpunkt des Empfangs der Bereitschafts-Quittung den zweiten Timer (WD2) zu starten und zu überwachen, ob innerhalb einer zweiten Laufzeit (T2) eine Fertig-Quittung empfangen wird.

10. Anlagensystem nach einem der Ansprüche 7 bis 9, wobei das erste Automatisierungsgerät (A) bzw. die erste Sende-Empfangs-Anwendung (SEA1) dazu ausgestaltet ist, nach dem Neustart der Kommunikation zusätzlich zu den gesendeten neuen Prozess-Ausgangs-Daten (OV) eine Signatur (CRC) über die neuen Kommunikationsparameter zu bilden und diese Signatur (CRC) mit zum zweiten Automatisierungsgerät (B) gesendet wird, und das zweite Automatisierungsgerät (B) ist dazu ausgestaltet die gesendete Signatur (CRC) mit einer im zweiten Automatisierungsgerät (B) über die neuen Kommunikationsparameter gebildete zweite Signatur (CRC') zu vergleichen, dabei ist dementsprechend die zweite Sende-Empfangs-Anwendung (SEA2) für diesen Vergleich ausgestaltet und kann durch die Kenntnis der neuen Kommunikationsparameter und das Bilden einer zweiten Signatur (CRC') eine Erwartungshaltung bezüglich der neuen Kommunikationsparameter erzeugen und sollte die Erwartungshaltung nicht übereinstimmen so wird eine Fehlerreaktion erzeugt und/oder Ersatzwerte bereitgestellt.

## Claims

1. Method for making configuration changes for communication parameters of a communication connection (1, 1') between a first automation device (A) and a second automation device (B), said communication connection being designed for functional safety,
- wherein a security protocol is used for interchanging data from the first automation device (A) to the second automation device (B) and vice versa, wherein
- the data are used as process output data (OV) or as process input data (IV) for a safety-critical process,
- a first transmission/reception application (SEA1) that performs the communication together with a first device driver (G1) runs on the first automation device (A), and
- a second transmission/reception application (SEA2) that performs the communication together with a second device driver (G2) runs on the second automation device (B), wherein
- the respective transmission/reception applications (SEA1, SEA2) and the respective device drivers (G1, G2) operate with a first set of communication parameters (KP1) before the change and with a second set of communication parameters (KP2) after the change, **characterized in that**
- the first automation device (A) sends the second automation device (B) a request (31) to change parameters and the second automation device (B) reacts to the request such that
- a ready acknowledgement (32) is sent in response to the request (31), and without delay upon transmission of the ready acknowledgement (32) in the second automation device (B)
- an output process image is frozen, as a result of which the process output data (OV) most recently output on the second automation device (B) are kept at their last value, and
- the change of communication parameters for the second automation device (B) is made, and additionally
- the first automation device (A) reacts such that
- after reception of the ready acknowledgement (32) in the first automation device (A) the communication is immediately stopped and the change of communication parameters for the first automation device (A) is made, wherein
- an input process image is frozen, as a result of which the process input data (IV) most recently applied to the first automation device (A) are kept at their last value,
- when the change of communication parameters in the first automation device (A) has concluded, the latter restarts the communication and sends new process output data (OV) as output process image to the second automation device (B), as a result of which the process output data (OV) most recently output on the second automation device (B) are replaced with updated process output data (OV).

2. Method according to Claim 1, wherein upon transmission of the ready acknowledgement (32) a first timer (WD1) having a first operating time (T1) is started in the second transmission/reception application (SEA2) and the first timer (WD1) is used to monitor whether the communication was restarted by the first automation device (A) within the first operating time (T1) and, as a result, new process output data (OV) were sent to the second automation device (B) as new output process image, and if this is the case the second automation device (A) reacts with a finished acknowledgement (35) and stops the first timer (WD1).

3. Method according to Claim 1 or 2, wherein after reception of the ready acknowledgement (32) in the first automation device (A) a second timer (WD2) having a second operating time (T2) is started in the first transmission/reception application (SAE1) and the second timer (WD2) is used to monitor whether the finished acknowledgement (35) was received within the second operating time (T2).

4. Method according to Claim 3, wherein the finished acknowledgement (35) comprises new process input data (IV) as new input process image for the first automation device (A).

5. Method for making the configuration changes in an industrial installation system for controlling the safety-critical process according to one of Claims 1 to 4, wherein it allows uninterrupted installation operation during the configuration changes.

6. Method according to one of Claims 1 to 5, wherein after the communication is restarted, in addition to the new process output data (OV) sent, a signature is formed using the new communication parameters and this signature is also sent to the second automation device (B), and in the second automation device (B) the signature (CRC) sent is compared with a signature (CRC') formed in the second automation device (B) using the new communication parameters.

7. Industrial installation system for controlling a safety-critical process having a first automation device (A) and a second automation device (B) connected to one another via a field bus (3),
- the first automation device (A) has a first transmission/reception application (SEA1) and a first device driver (G1),
- the second automation device (B) has a second transmission/reception application (SEA2) and a second device driver (G2),
- additionally there is a configuration system (2) designed to configure the respective transmission/reception applications (SEA1, SEA2) and the respective device drivers (G1, G2) using a first set of communication parameters (KP1) and to configure the respective transmission/reception applications (SEA1, SEA2) and the respective device drivers (G1, G2) using a second set of communication parameters (KP2) for the purpose of a change, **characterized in that**
- the first automation device (A) is designed to receive a request (31) to change parameters from the configuration system (2) and sends said request to the second automation device (B) to change parameters, and then
- the second automation device (B) is designed to react to the request (31) such that a ready acknowledgement (32) is sent in response to the request (31), and additionally the second automation device (B) is designed so as, without delay at the time of transmission of the ready acknowledgement (32),
- to freeze an output process image, as a result of which the process output data (OV) most recently output on the second automation device (B) are kept at their last value, and
- to prompt the change of communication parameters for the second automation device (B), and additionally
- the first automation device (A) is designed so as,
- after reception of the ready acknowledgement (32) in the first automation device (A), to immediately stop the communication and to make the change of communication parameters for the first automation device (A),
- to freeze an input process image, as a result of which the process input data (IV) most recently applied to the first automation device (A) are kept at their last value,
- when the change of communication parameters in the first automation device (A) has concluded, to restart the communication and to send new process output data (OV) as output process image to the second automation device (B).

8. Installation system according to Claim 7, wherein the second transmission/reception application (SEA2) has a first timer (WD1) and is designed to start the first timer (WD1) at the time of transmission of the ready acknowledgement (32) and to monitor whether the communication was restarted by the first automation device (A) within a first operating time (T1) .

9. Installation system according to Claim 8, wherein the first transmission/reception application (SEA2) has a second timer (WD2) and is designed to start the second timer (WD2) at the time of reception of the ready acknowledgement and to monitor whether a finished acknowledgement is received within a second operating time (T2).

10. Installation system according to one of Claims 7 to 9, wherein the first automation device (A) or the first transmission/reception application (SEA1) is designed so as, after the communication is restarted, in addition to the new process output data (OV) sent, to form a signature (CRC) using the new communication parameters, and this signature (CRC) is also sent to the second automation device (B), and the second automation device (B) is designed to compare the signature (CRC) sent with a second signature (CRC') formed in the second automation device (B) using the new communication parameters, and then accordingly the second transmission/reception application (SEA2) is designed for this comparison and can produce an expectation with regard to the new communication parameters as a result of knowledge of the new communication parameters and the formation of a second signature (CRC'), and if the expectation does not tally then an error reaction is produced and/or replacement values are provided.

## Revendications

1. Procédé de changement de configuration de paramètres de communication d'une liaison (1, 1') de communication conçue en sécurité fonctionnelle entre un premier appareil (A) d'automatisation et un deuxième appareil (B) d'automatisation,
- dans lequel, pour l'échange de données du premier appareil (A) d'automatisation au deuxième appareil (B) d'automatisation et inversement, on utilise un protocole sécurisé, dans lequel
- les données servent de données (OV) de sortie de processus ou de données (IV) d'entrée de processus pour un processus critique du point de vue de la sécurité,
- sur le premier appareil (A) d'automatisation, se déroule une première application (SEA1) d'émission-réception, qui, ensemble avec un premier excitateur (G1) d'appareil, effectue la communication et,
- sur le deuxième appareil (B) d'automatisation se déroule une deuxième application (SEA2) d'émission-réception, qui, ensemble avec un deuxième excitateur (G2) d'appareil, effectue la communication, dans lequel
- les applications (SEA1, SEA2) d'émission-réception respectives et les excitateurs (G1,G2) d'appareil respectifs travaillent avant le changement avec un premier jeu de paramètres (KP1) de communication et, après le changement, avec un deuxième jeu de paramètres (KP2) de communication **caractérisé en ce que**
- le premier appareil (A) d'automatisation envoie au deuxième appareil (B) d'automatisation une demande (31) de changement de paramètres et le deuxième appareil (B) d'automatisation réagit à la demande de manière
- à envoyer, sur la demande, un accusé (32) de réception de disponibilité, puis sans délai avec l'émission de l'accusé (32) de réception de disponibilité dans le deuxième appareil (B) d'automatisation
- à geler une reproduction de processus de sortie, grâce à quoi les données (OV) de sortie de processus émises en dernier au deuxième appareil (B) d'automatisation sont maintenues à leur dernière valeur, et
- à effectuer le changement des paramètres de communication pour le deuxième appareil (B) d'automatisation et, en outre,
- le premier appareil (A) d'automatisation réagit de manière à ce que
- après réception de l'accusé (32) de réception de disponibilité dans le premier appareil (A) d'automatisation, la communication soit arrêtée sans délai et le changement des paramètres de communication soit effectué pour le premier appareil (A) d'automatisation, dans lequel
- une reproduction de processus d'entrée est gelée, grâce à quoi
- les données (IV) d'entrée de processus présentes en dernier au premier appareil (A) d'automatisation sont maintenues à leur dernière valeur,
- si le changement des paramètres de communication est terminé dans le premier appareil (A) d'automatisation, celui-ci lance à nouveau la communication et envoie de nouvelles données (OV) de sortie de processus comme reproduction de processus de sortie au deuxième appareil (B) d'automatisation, grâce à quoi les données (OV) de sortie de processus émises en dernier au deuxième appareil (B) d'automatisation sont remplacées par des données (OV) de sortie de processus mises à jour.

2. Procédé suivant la revendication 1, dans lequel, avec l'émission de l'accusé (32) de réception de disponibilité, on fait débuter une première minuterie (WD1) ayant un premier temps (T1) de fonctionnement dans la deuxième application (SEA2) d'émission-réception et, au moyen de la première minuterie (WD1), on contrôle si, dans le premier temps (T1) de fonctionnement, la communication a été relancée par le premier appareil (A) d'automatisation et ainsi de nouvelles données (OV) de sortie de processus ont été envoyées comme nouvelles reproductions de processus de sortie au deuxième appareil (B) d'automatisation et, si cela est le cas, le deuxième appareil (B) d'automatisation réagit par un accusé (35) de réception prêt et arrête la première minuterie (WD1).

3. Procédé suivant la revendication 1 ou 2, dans lequel, après réception de l'accusé (32) de réception de disponibilité dans le premier appareil (A) d'automatisation, on fait débuter une deuxième minuterie (WD2) ayant un deuxième temps (T2) de fonctionnement dans la première application (SAE1) d'émission-réception et on contrôle, au moyen de la deuxième minuterie (WD2), si, dans le deuxième temps (T2) de fonctionnement, l'accusé (35) de réception prêt a été reçu.

4. Procédé suivant la revendication 3, dans lequel l'accusé (35) de réception prêt comprend de nouvelles données (IV) d'entrée de processus comme nouvelle reproduction d'entrée de processus pour le premier appareil (A) d'automatisation.

5. Procédé pour effectuer le changement de configuration dans un système d'installation industriel, afin de commander le processus critique du point de vue de la sécurité suivant l'une des revendications 1 à 4, dans lequel on rend ainsi possible pendant les changement de configuration un fonctionnement de l'installation sans interruption.

6. Procédé suivant l'une des revendication 1 à 5, dans lequel, après le relancement de la communication, on forme, supplémentairement aux nouvelles données (OV) de sortie de processus envoyées, une signature par les nouveaux paramètres de communication et on envoie cette signature au deuxième appareil (B) d'automatisation et, dans le deuxième appareil (B) d'automatisation, on compare la signature (CRC) envoyée à une signature (CRC') formée dans le deuxième appareil (B) d'automatisation par les nouveaux paramètres de communication.

7. Système d'installation industriel pour la commande d'un processus critique du point de vue de la sécurité, comprenant un premier appareil (A) d'automatisation et un deuxième appareil (B) d'automatisation, qui sont reliés entre eux par un bus (3) sur site,
- le premier appareil (A) d'automatisation a une première application (SEA1) d'émission-réception et un premier excitateur (G1) d'appareil,
- le deuxième appareil (B) d'automatisation a une deuxième application (SEA2) d'émission-réception et un deuxième excitateur (G2) d'appareil,
- il y a en outre un système de configuration, qui est conformé pour configurer les applications (SEA1, SEA2) d'émission-réception respectives et les excitateurs (G1, G2) d'appareil respectifs par un premier jeu de paramètres (KP1) de communication et pour un changement pour configurer les applications (SEA1, SEA2) d'émission-réception respectives et les excitateurs (G1, G2) d'appareil respectifs par un deuxième jeu de paramètres (K2) de communication, **caractérisé en ce que**
- le premier appareil (A) d'automatisation est conformé pour recevoir du système (2) de configuration une demande (31) de changement de paramètres et l'envoyer pour le changement de paramètres au deuxième appareil (B) d'automatisation, à cet effet
- le deuxième appareil (B) d'automatisation est conformé pour réagir à la demande (31) de manière à envoyer un accusé (32) de réception de disponibilité sur la demande (31), en outre le deuxième appareil (B) d'automatisation est conformé pour, sans délai avec l'instant d'émission de l'accusé (32) de réception de disponibilité,
- geler une reproduction de processus de sortie, grâce à quoi les données (OV) de sortie de processus émises en dernier au deuxième appareil (B) d'automatisation sont maintenues à leur dernière valeur, et
- le changement des paramètres de communication est provoqué pour le deuxième appareil (B) d'automatisation et, en outre
- le premier appareil (A) d'automatisation est conformé pour
- après réception de l'accusé (32) de réception de disponibilité dans le premier appareil (A) d'automatisation, arrêter sans délai la communication, et effectuer le changement des paramètres de communication pour le premier appareil (A) d'automatisation,
- geler une reproduction de processus d'entrée, grâce à quoi les données (IV) d'entrée de processus présentes en dernier dans le premier appareil (A) d'automatisation sont maintenues à leur dernière valeur,
- après que le changement des paramètres de communication est, terminé dans le premier appareil (A) d'automatisation, relancer la communication, l'établir et envoyer de nouvelles données (OV) de sortie de processus comme reproduction de processus de sortie au deuxième a appareil (B) d'automatisation.

8. Système d'installation suivant la revendication 7, dans lequel la deuxième application (SEA2) d'émission-réception a une première minuterie (WD1) et est conformé pour, à l'instant de l'envoi de l'accusé (32) de réception de disponibilité, faire débuter la première minuterie (WD1) et pour contrôler si, dans un premier temps (T1) de fonctionnement, la communication a été relancée par le premier appareil (A) d'automatisation.

9. Système d'installation suivant la revendication 8, dans lequel la première application (SEA2) a une deuxième minuterie (WD2) et est conformée pour, à l'instant de la réception de l'accusé de réception de disponibilité, faire débuter la deuxième minuterie (WD2) et pour contrôler si, dans un deuxième temps (T2) de fonctionnement, un accusé de réception prêt est reçu.

10. Système d'installation suivant l'une des revendications 7 à 9, dans lequel le premier appareil (A) d'automatisation et respectivement la première application (SEA1) d'émission-réception, est conformé pour, après le nouveau début de la communication, former, supplémentairement aux nouvelles données (OV) de sortie de processus envoyées, une signature (CRC) par les nouveaux paramètres de communication et envoyer cette signature (CRC) au deuxième appareil (B) d'automatisation et le deuxième appareil (B) d'automatisation est conformé pour comparer la signature la signature (CRC) envoyée à une deuxième signature (CRC') formée dans le deuxième appareil (B) d'automatisation par les nouveaux paramètres de communication et, d'une manière correspondante, la deuxième application (SEA2) d'émission-réception est conformée pour cette comparaison et peut, par la connaissance des nouveaux paramètres de communication et la formation d'une deuxième signature (CRC'), produire un maintien en attente en ce qui concerne les nouveaux paramètres de communication et, si le maintien en attente ne devait pas coïncider, produire une réaction d'erreur et/ou mettre à disposition des valeurs de remplacement.
